# EUROPEAN PATENT APPLICATION

(11) **EP 4 538 857 A1**
(43) Date of publication of application: **16.04.2025**
(21) Application number: 24729714.6
(22) Date of filing: 29.05.2024
(51) Int. Cl.: G06F 3/16, G06F 3/14, G06F 1/16, H04R 1/10, H04R 1/06, G06F 3/0484

(54) **ELECTRONIC DEVICE FOR CONTROLLING AUDIO OUTPUT ACCORDING TO DISPLAY STATE, OPERATING METHOD THEREOF, AND STORAGE MEDIUM**

(30) Priority: 21.08.2023 KR 20230108841; 19.09.2023 KR 20230125096
(71) Applicant: Samsung Electronics Co., Ltd., Suwon-si, Gyeonggi-do 16677 (KR)
(72) Inventor: KIM, Kitae, Suwon-si, Gyeonggi-do 16677 (KR); SON, Beakkwon, Suwon-si, Gyeonggi-do 16677 (KR); KIM, Choonho, Suwon-si, Gyeonggi-do 16677 (KR)
(74) Representative: Gulde & Partner
(86) International application number: PCT/KR2024/007326
(87) International publication number: WO 2025/041980

(57) **Abstract**

According to an embodiment, an electronic device (101) may include a display (160, 560), at least one sensor (176, 576), an audio device (570), at least one processor (120, 520), and memory (530) storing instructions. According to an embodiment, the instructions, when executed by the at least one processor, cause the electronic device to the at least one processor may be configured to, in response to execution of an application, identify a state of the display using the sensor. According to an embodiment, the instructions cause the electronic device to, based on the identifying that the display is in the first state, generate a first stereoscopic audio signal from an audio signal, using an audio processing unit (521) set to a first gain, and output the generated first stereoscopic audio signal through the audio device. According to an embodiment, the instructions cause the electronic device to, based on identifying that the state of the display has changed from the first state to a second state, change a gain of the audio processing unit from the first gain to a second gain. According to an embodiment, the instructions cause the electronic device to generate a second stereoscopic audio signal from the audio signal, using the audio processing unit set to the second gain and output the generated second stereoscopic audio signal through the audio device.

## Description

### [Technical Field]

Embodiments disclosed in the disclosure relate to an electronic device for controlling an audio output according to a display state, and an operating method and a storage medium for the same.

### [Background Art]

Advances in electronic technology have led to the development of various types of flexible electronic devices. Such flexible electronic devices may secure portability while providing wider displays. For example, a flexible electronic device may have a shape deformed by a user and provide a display which is foldable, bendable, slidable, or rollable. For example, a display (or an electronic device including the same) using an organic light emitting diode may achieve stable operations while being made substantially thin.

Furthermore, user demands for the performance of electronic devices grow increasingly sophisticated and diverse, and audio performance may be considered as one of the key indicators of a product's performance. A general electronic device today may include multiple speakers and perform an audio output by using multiple speakers.

The above information may be presented as related art for the purpose of assisting in understanding the disclosure. No assertion or decision is made as to whether any of the above might be applicable as prior art with regard to the disclosure.

### [Detailed Description of the Invention]

### [Technical Solution]

According to an embodiment, an electronic device includes a display, at least one sensor, an audio device, at least one processor, and memory string instructions.

According to an embodiment, the instructions that, when executed by the at least one processor, cause the electronic device to, in response to execution of an application, identify a state of the display by using the sensor.

According to an embodiment, the instructions are configured to cause the electronic device to, based on the identifying that the display is in the first state, generate a first stereoscopic audio signal from an audio signal using an audio processing unit set to a first gain, and output the generated first stereoscopic audio signal through the audio module.

According to an embodiment, the instructions are configured to cause the electronic device to, based on identifying that the state of the display has changed from the first state to a second state, change a gain of the audio processing unit from the first gain to a second gain.

According to an embodiment, the instructions are configured to cause the electronic device to generate a second stereoscopic audio signal from the audio signal using the audio processing unit set to the second gain and output the generated second stereoscopic audio signal through the audio device or an audio module.

According to an embodiment, an operating method of controlling an audio output according to a display state in the electronic device includes an operation of identifying, in response to execution of an application, a state of the display of the electronic device by using at least one sensor of the electronic device.

According to an embodiment, the method includes an operation of generating, based on the identifying that the display is in the first state, a first stereoscopic audio signal from an audio signal, using an audio processing unit set to a first gain, and outputting the generated first stereoscopic audio signal through an audio device.

According to an embodiment, the method includes an operation of, based on identifying that the state of the display has changed from the first state to a second state changing a gain of the audio processing unit from the first gain to a second gain.

According to an embodiment, the method includes an operation of generating a second stereoscopic audio signal from the audio signal, using the audio processing unit set to the second gain and outputting the generated second stereoscopic audio signal through the audio device.

An embodiment provides a computer-readable storage medium configured to store at least one instruction, wherein the at least one instruction causes, when executed by at least one processor of an electronic device, the electronic device to perform at least one operation, and the at least one operation includes an operation of identifying, in response to execution of an application, a state of a display of the electronic device by using at least one sensor of the electronic device.

According to an embodiment, the at least one operation includes an operation of generating, based on the identifying that the display is in the first state, a first stereoscopic audio signal from an audio signal, using an audio processing unit set to a first gain, and output the generated first stereoscopic audio signal through an audio device.

According to an embodiment, the at least one operation includes an operation of changing, based on identifying that the state of the display has changed from the first state to a second state, a gain of the audio processing unit from the first gain to a second gain.

According to an embodiment, the at least one operation includes an operation of generating a second stereoscopic audio signal from the audio signal, using the audio processing unit set to the second gain and outputting the generated second stereoscopic audio signal through the audio device.

### [Brief Description of Drawings]

FIG. 1 is a block diagram of an electronic device in a network environment according to an embodiment.
FIG. 2 is a diagram illustrating an unfolded state and a folded state of an electronic device having a first form according to an embodiment.
FIG. 3A is an exemplary diagram illustrating a front surface and a rear surface of an electronic device in an unfolded state of the electronic device having a second form according an embodiment.
FIG. 3B is an exemplary diagram illustrating a folded state of the electronic device in FIG. 3A.
FIG. 4 is diagram illustrating a slide-in state and a slide-out state of an electronic device having a third form according to an embodiment.
FIG. 5 is an internal block diagram of an electronic device according to an embodiment.
FIG. 6 is a block diagram for generating a stereoscopic audio signal according to an embodiment.
FIG. 7 is a flowchart for controlling an audio output according to a display state in an electronic device according to an embodiment.
FIG. 8 is an exemplary diagram illustrating a head-related transfer function according to an embodiment.
FIG. 9 is an exemplary diagram illustrating an artificial reverberator according to an embodiment.
FIG. 10 is an exemplary diagram illustrating a crosstalk canceller according to an embodiment.
FIG. 11 is an operation flowchart of an audio processing unit according to a display state according to an embodiment.
FIG. 12 is an exemplary diagram illustrating a characteristic of a stereoscopic audio signal output according to a display state with respect to a user according to an embodiment.

With regard to the description of the drawings, the same or like reference signs may be used to designate the same or like elements.

### [Mode for Carrying out the Invention]

Hereinafter, embodiments of the disclosure will be described in detail with reference to the drawings so that those skilled in the art to which the disclosure pertains can easily implement the disclosure. However, the present disclosure may be implemented in various forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

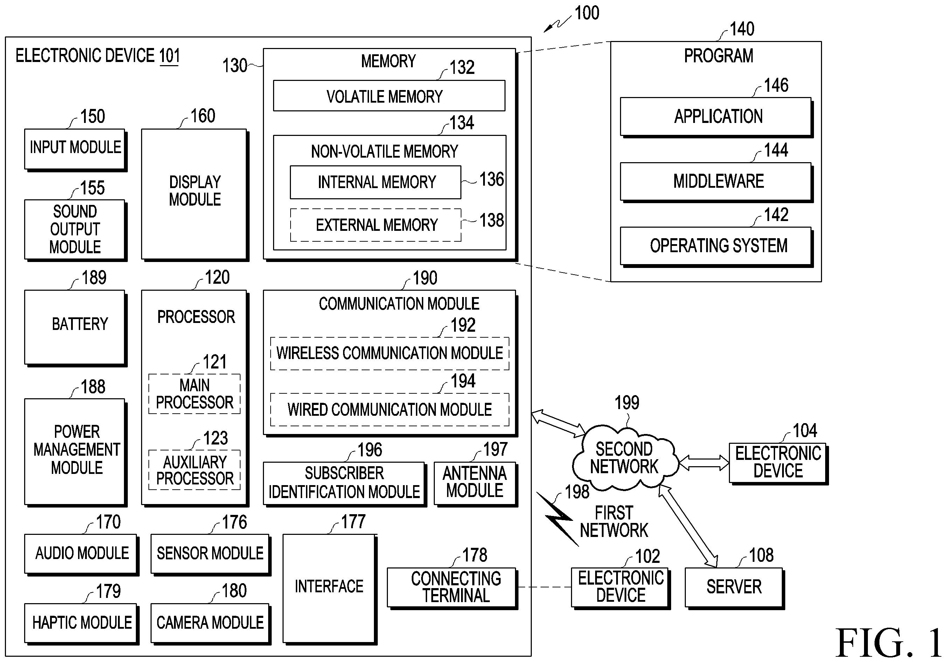

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, configurations that can be understood through the preceding embodiments may be provided with the same reference numerals in the drawings or provided with no reference numerals, and detailed descriptions thereof may also be omitted. The electronic device according to an embodiment set forth herein may be implemented by selectively combining the configurations of different embodiments, and the configuration of an embodiment may be replaced with the configurations of another embodiment, For example, it is noted that the disclosure is not limited to a specific drawing or embodiment.

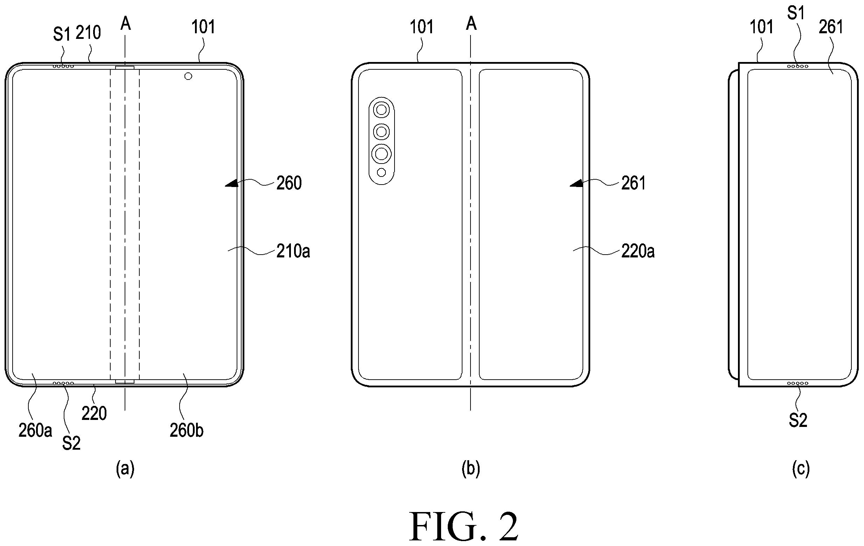

FIG. 2 is a diagram illustrating an unfolded state and a folded state of an electronic device having 101 a first form according to an embodiment.

Referring to FIG. 2, in an embodiment, the electronic device 101 may include a foldable housing and a foldable display 260 disposed in a space configured by the foldable housing. The foldable housing may have a shape substantially symmetrical with respect to a folding axis (e.g., axis A). According to an embodiment, a surface on which a first display 260 is disposed may be defined as a first surface 210a of the electronic device 101 (or a front surface of the electronic device 101) and a surface opposite to the first surface 210a may be defined as a second surface 220a (or a rear surface of the electronic device 101).

Referring to FIG. 2, the electronic device 101 may have a first form that is longer vertically than horizontally, based on the front surface. For example, the electronic device 101 having the first form may be referred to as a fold electronic device and a state in which lower side surfaces of a body with respect to a folding axis (e.g., axis A) of the electronic device 101 having the first form face downward may be referred to as a portrait mode. In addition, a state in which one of both lateral side surfaces of the body with respect to the folding axis (e.g., axis A) in the electronic device 101 having the first form face downward may be referred to as a landscape mode.

As shown in FIG. 2(a), the first display 260 may be disposed to occupy substantially the entire first surface 210a of the electronic device 101. As shown in FIG. 2(b), the second display 261 may be disposed to occupy at least a portion of the second surface 220a or substantially the entire second surface 220a. In this case, the first display 260 may pivot through a separate hinge module, and the second display 261 may be fixed to the housing. For example, the hinge structure may be configured to be folded or unfolded inward or outward. For example, a free stop hinge may maintain a folded state of the electronic device 101 at various angles.

For example, the second display 261 may be disposed on one of a pair of housings disposed on both sides with respect to the folding axis (e.g., axis A). According to an embodiment, the first display 260 may correspond to a flexible display having at least a partial area transformable to a flat surface or a curved surface. The first display 260 may include a first area (or a first display area) 260a disposed on one side based on the folding axis (e.g., axis A) and a second area (or a second display area) 260b disposed on the other side.

For example, in case that the electronic device 101 is in the unfolded state (e.g., a flat state), a surface of the first area 260a and a surface of the second area 260b may face an identical direction (e.g., a front direction of the electronic device 101) while forming 180 degrees therebetween.

In case that the electronic device 101 is in the folded state as shown in FIG. 2(c), a surface of the first area 260a and a surface of the second area 260b of the first display 260 may face each other while forming a narrow angle (e.g., between 0 degrees and 10 degrees) therebetween. According to an embodiment, the second display 261 may be disposed on one of a pair of housings disposed on both sides with respect to the folding axis (e.g., axis A) when the electronic device 101 is in the folded state, but this is merely an example, and the second display 261 may be disposed on most of the rear surface 220a depending on a structure or function thereof. For example, the electronic device 101 may include the second display 261 of which at least a portion is visually exposed through a rear cover. Accordingly, note that the size and shape of the first display 260 and the second display 261 are not limited thereto. In addition, the division of areas in the first display 260 of FIG. 2(a) is exemplary and the first display may be divided into multiple areas (e.g., two, four, or more than four) according to the structure or function thereof.

According to an embodiment, the foldable housing of the electronic device 101 may include an opening for an audio module (e.g., a speaker) or an audio device as indicated by S1 or S2. For example, as shown in FIG. 2, the audio module may be disposed on an upper portion 210 and/or a lower portion 220 of the electronic device 101, but the disposition location of the audio module is not limited thereto.

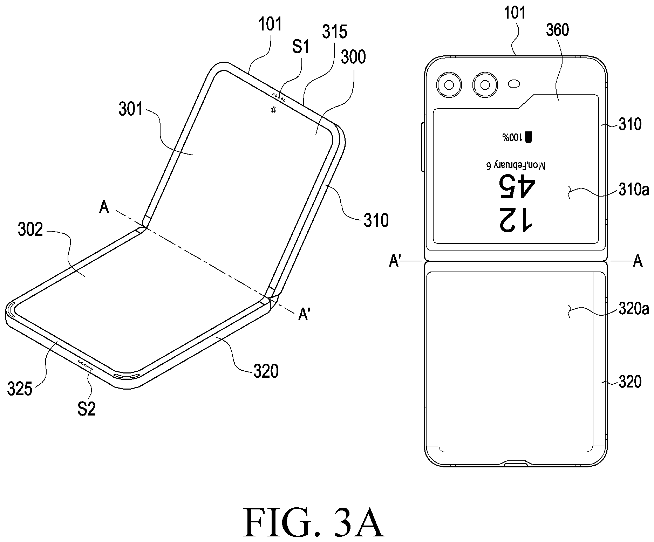

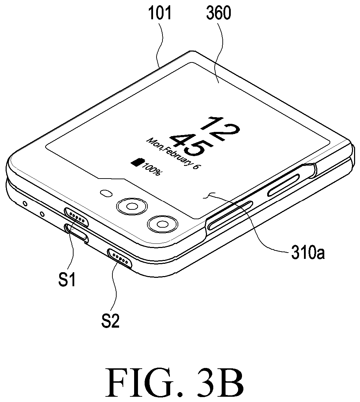

FIG. 3A is an exemplary diagram illustrating a front surface and a rear surface of an electronic device in an unfolded state of the electronic device having a second form according to an embodiment, and FIG. 3B is an exemplary diagram illustrating a folded state of the electronic device in FIG. 3A.

As shown in FIG. 3A and FIG. 3B, the foldable housing may include a first housing structure 310 and a second housing structure 320. The foldable housing of the electronic device 101 is not limited to the shape and mounting shown in FIG. 3A and FIG. 3B, and may be implemented by another shape or combination and/or mounting of components. According to an embodiment, the first housing structure 310 and the second housing structure 320 may be arranged on opposite sides of the folding axis (A-A') and have generally symmetric shapes with respect to the folding axis (A-A'). An angle or distance between the first housing structure 310 and the second housing structure 320 may vary according to whether the electric device 101 is in the unfolded state, the folded state, or a partially unfolded (or partially folded) intermediate state.

According to an embodiment, when the electronic device 101 is in the unfolded state, the first housing structure 310 and the second housing structure 320 may be arranged to form an angle of about 180 degrees therebetween and face substantially an identical direction. In the unfolded state, a surface of a first display area 301 and a surface of a second display area 302 of the display 300 may form an angle of 180 degrees therebetween and face an identical direction (e.g., the front direction of the electronic device 101).

According to an embodiment, when the electronic device 101 is in the partially folded state, the first housing structure 310 and the second housing structure 320 may form an angle of about 90 degrees and about 180 degrees therebetween.

According to an embodiment, a sub-display 360 may be disposed on at least a portion of a rear surface 310a or 320a of the electronic device 101. In an embodiment, in the folded state, the electronic device 101 may provide a content through the sub-display 360. For example, the content may include a standby screen or an application execution screen.

Based on the unfolded state, the display 300 disposed on the front surface of the electronic device 101 may be referred to as a front display (or main display), and the sub-display 360 disposed on the rear surface may be referred to as a rear display (or sub-display). According to an embodiment, the first housing structure 310 and the second housing structure 320 may include an opening for an audio module (e.g., a speaker) or an audio device as indicated by S1 or S2. For example, the audio module may be disposed on the upper portion 315 and/or the lower portion 325 of the electronic device 101.

As such, the electronic device 101 including the foldable display (or flexible display) may be folded or bent with respect to one axis. Here, the one axis may be preconfigured or arbitrary. The case in which the axis is preconfigured may be referred to as a case in which a predetermined area (e.g., a partial area including the axis) of the foldable display of the electronic device 101 is bendable. On the other hand, the case in which the axis is arbitrary may be referred to as a case in which the entire area of the display of the electronic device is bendable. In FIGS. 3A and 3B, the electronic device is shown as being folded in half based on an axis extending through the center thereof, but it may be easily understood by those skilled in the art that there are no restrictions on the position of the axis.

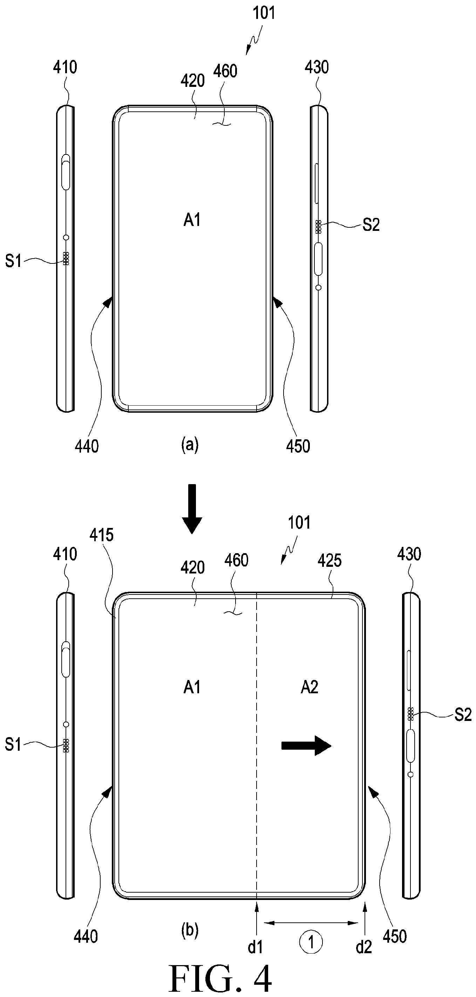

FIG. 4 is a diagram illustrating a slide-in state and a slide-out state of an electronic device having a third form according to an embodiment.

Referring to FIG. 4, the electronic device 101 may include a housing 420 and a display disposed in a space defined by the housing 420. At least a portion of the display may include a slidable or rollable shape.

FIG. 4(a) illustrates a state in which a portion (e.g., a first area A1) of the display is exposed to the outside of the housing 420, and FIG. 4(b) illustrates a state in which another portion (e.g., a second area A2) of the display is received in the housing 420 and then completely exposed to the outside of the housing. The state shown in FIG. 4(a) may be referred to as a slide-in state of the electronic device 101 or a closed state of the second area A2 of the display. The state shown in FIG. 4(b) may be referred to as a slide-out state of the electronic device 101 or an open state of the second area A2 of the display.

According to an embodiment, the electronic device 101 may have an intermediate state between the slide-in state (e.g., a fully closed state) of FIG. 4(a) and the slide-out state (e.g., a fully opened state) of FIG. 4(b). According to an embodiment, an area exposed to the outside may vary according to sliding of at least a portion of the display 460 in the intermediate state of the electronic device 101. Accordingly, another portion (e.g., the second area A2) of the display of the electronic device 101 may be partially exposed to the outside of the housing 420.

Referring to FIG. 4, according to an embodiment, the electronic device 101 may include a housing 420 including a first housing portion 415 and a second housing portion 425, wherein the second housing portion 425 may be configured to be movably linked to the first housing portion 415 between a retracted (or received into the first housing portion 415 or inserted) location (or state) d1 and an extended (or expanded, unfolded, or stretched) location (or state) d2.

According to an embodiment, the electronic device 101 may include a flexible display 460 to be connected to the first housing portion 415 and the second housing portion 425 so that a portion visible from the front side of the housing 420 has variable sizes depending on the second housing portion 425 moving between the retracted location (or state) d1 and the extended location (or state) d2.

According to an embodiment, the electronic device 101 may include an actuator configured to move the second housing portion 425 with respect to the first housing portion 415.

According to an embodiment, the housing 420 may include the first housing portion 415 and the second housing portion 425 relatively movable with respect to the first housing portion 415. In an embodiment, it may be comprehend as a structure that the first housing portion 415 is slidably disposed on the second structure portion 425 in the electronic device 101. According to an embodiment, the second housing portion 425 may be disposed to be capable of reciprocating by a predetermined distance in a direction, for example, a direction indicated by arrow ①, based on the first housing portion 415. When the electronic device 101 is in the slide-in state, the second housing portion 425 may be defined as the retracted location, and when the electronic device 101 is in the slide-out state, the second housing portion 425 may be defined as the extended location.

As shown in FIGS. 4(a) and 4(b), the housing 420 may include a first lateral wall 410 and a second lateral wall 430 in a first lateral surface (or a long side) (e.g., a lateral surface 440 or a lateral surface 450). According to an embodiment, in case that the lateral wall is disposed to surround the display 460, as indicated by S1 or S2, an opening for an audio module (e.g., a speaker) or an audio device may be configured in the first lateral wall 410 or in the second lateral wall 430, or in another wall of the housing 420. FIG. 4 illustrates the case in which the audio module is disposed in at least one of both sides of the electronic device 101, that is, both lateral portions 440 and 450, but the location of the audio module is not limited thereto. According to an embodiment, the audio module is disposed on a portion adjacent to the lateral wall in FIG. 4, the disclosure is not limited thereto, and the audio module may be disposed at both edges of the housing or a structure defined by coupling or assembling other separate structures. As such, the electronic device 101 may be designed so that the audio module is included in a structure extended or reduced depending on an appearance and usage thereof. For example, in FIG. 4(b), the second housing portion 425 is exemplified to slide in one direction (e.g., a right direction) based on the first housing portion 415, but may slide in another direction (e.g., a left direction) or both direction (e.g., the right and left directions).

Although it is exemplified that one speaker is disposed on at least one lateral surface among respective lateral surfaces of the housing in FIGS. 2 to 4, multiple speakers may be disposed. For example, two or more speakers may be disposed on the first lateral surface (e.g., the upper portion 210 of the electronic device in FIG. 2, the upper portion 315 of the electronic device in FIG. 3A, or the lateral surface 440 in FIG. 4), and two or more speakers may be disposed on the second lateral surface (e.g., the lower portion 220 of the electronic device in FIG. 2, the lower portion 325 of the electronic device in FIG. 3A, or the lateral surface 450 in FIG. 4).

As shown in FIGS. 2 to 4, in case that the electronic device 101 includes a foldable display (e.g., the first display 260 in FIG. 2 or the display 300 in FIG. 3) or a slidable or rollable display (e.g., the display 460 in FIG. 4), the location of the speaker (e.g. with respect to a user) may be changed rather than being fixed when the state of the display changes. Here, processing an audio signal may cause deviations in audio performance, and in case of outputting a stereoscopic audio signal, it may be difficult to provide a realistic sound that a user wants. In case that a stereoscopic audio signal to which a configured stereoscopic audio signal effect has been applied is output regardless of the state of the display, even if a content is reproduced through a relatively small screen in the folded state or slide-out state of the display, a sound effect that a sound is generated far away in space is output and thus the user may feel uncomfortable due to disharmony between vision and hearing.

An embodiment may provide an electronic device for controlling an audio output according to a display state, an operating method thereof, and a storage medium to output a stereoscopic audio signal generated by correcting an audio signal output through the audio module adaptively according to the state of the display. In an embodiment, a stereoscopic audio effect may be maximized in case of requiring application of the stereoscopic audio effect depending on the state of the display, thereby providing a realistic content and sound to the user.

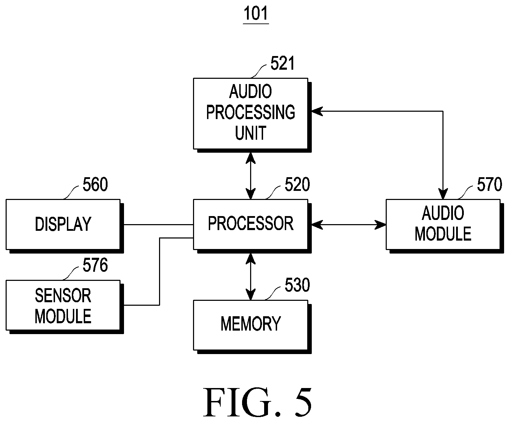

FIG. 5 is an internal block diagram of an electronic device according to an embodiment.

Referring to FIG. 5, an electronic device 101 (e.g., the electronic device 101 in FIGS. 1 to 4) may include a display 560 (e.g., the display 160 in FIG. 1, the first display 260 in FIG. 2, the display 300 in FIG. 3A, or the display 460 in FIG. 4), a sensor module (or a sensor device) 576 (e.g., the sensor module 176 in FIG. 1), an audio processing unit 521, an audio module (or an audio device) 570 (e.g., the audio module 170 in FIG. 1), and at least one processor 520 (e.g., the processor 120 in FIG. 1). The electronic device 101 may further include memory 530 (e.g., the memory 130 in FIG. 1). According to an embodiment, the electronic device 101 may omit at least one component thereof or additionally include other components.

According to an embodiment, the sensor module 576 may include at least one sensor. In case that the display 560 corresponds to a foldable display (e.g., the display 260 in FIG. 2 or the display 300 in FIG. 3A), the sensor module 576 may include a sensor (e.g., a digital Hall sensor or a six-axis sensor) to determine a folded angle and a state of the display 560 (or a state of the electronic device 101) (e.g., the unfolded state, the folded state, and/or the partially folded state). In addition to the above, the sensor 576 may include a strain sensor for outputting a strain value used for indirectly measuring a folded angle of the electronic device 101.

In an embodiment, in case that the display 560 corresponds to a slidable or rollable display (e.g., the display 460 in FIG. 4), the sensor module 576 may include a sensor for determining a movement distance (or extension degree) and a state of the display 560 (or a state of the electronic device 101) (e.g., the slide-out state, the slide-in state, and/or the intermediate state).

According to an embodiment, the processor 520 may identify a movement distance (or extension degree or extension distance) based on at least one of a motor for moving the display 560 or a change in capacitance of the display 560 in addition to the at least one sensor.

According to an embodiment, the processor 520 may execute at least one application that requires an output of an audio signal, such as a voice call function, audio file playback function, or video recording function. The processor 520 may visually output (or display) a content corresponding to the application through the display 560. Furthermore, the processor 520 may audibly output an audio signal associated with the content through the audio module 570.

According to an embodiment, the audio processing unit 521 may receive or output an audio signal through the audio module 570 and may process an audio signal with respect to the audio module 570. According to an embodiment, the audio processing unit 521 may include an audio digital signal processor (DSP). Although it is exemplified that the processor 520 and the audio processing unit 521 are separately implemented in FIG. 5, the audio processing unit 521 may be implemented to be included in the processor 520. For example, the processor 520 may include an audio DSP, and the audio DSP may perform software (S/W) tuning solution driving.

According to an embodiment, the audio processing unit 521 may process an audio signal (hereinafter, an output audio signal) which is generated by execution of an application requiring an output of an audio signal, such as a voice call function, audio file playback function, or video recording function and is output through a speaker (e.g., an output audio signal through the audio module (e.g., a speaker) of FIGS. 2 to 4), and an input audio signal to a microphone (not shown). For example, in a state in which an earphone (not shown) is connected to the electronic device 101, the output audio signal may be output through a speaker of the earphone rather than the speaker (e.g., the audio module in FIGS. 2 to 4).

According to an embodiment, the audio processing unit 521 or the processor 520 may identify a gain to be applied to the output audio signal depending on the state of the display (or a state of the electronic device 101) (e.g., the slide-out state, the slide-in state, folded state, closed state, and/or an intermediate state). The audio processing unit 521 or the processor 520 may generate a stereoscopic audio signal by using software (or an algorithm) for generating a stereoscopic audio effect.

According to an embodiment, the audio processing unit 521 or the processor 520 may operate based on at least one of a head related transfer function (HRTF), an artificial reverberator, or a crosstalk canceller to generate a stereoscopic audio effect. According to an embodiment, the operation of the audio processing unit 521 or the processor 520 may be performed by a hardware and/or software component which may be referred to as a "unit" or "module". For example, the algorithm for generating the stereoscopic audio effect may be referred to by terms such as a stereoscopic effect filter, a stereoscopic sound generation unit, or a stereoscopic sound generation module. Here, the stereoscopic audio effect may represent a three-dimensional audio signal (or three-dimensional sound) that makes it sound like as if the audio signal is output through speakers at various locations within a virtual space, and may be referred to as a spatial audio effect.

According to an embodiment, the head related transfer function, the artificial reverberator, or the crosstalk canceller is exemplified as an example of the algorithm for generating the stereoscopic audio effect, but the type of the algorithm is not limited thereto.

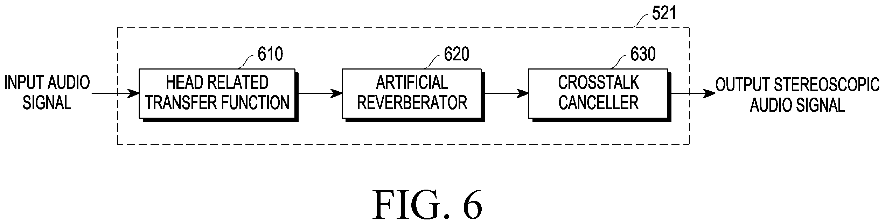

For example, as shown in FIG. 6, the audio processing unit 521 may include multiple components for generating the stereoscopic audio effect. Here, FIG. 6 is a block diagram for generating a stereoscopic audio signal according to an embodiment. Although FIG. 6 exemplifies the case in which the head related transfer function 610, the artificial reverberator 620, or the crosstalk canceller 630 is implemented as respective components within the audio processing unit 521, the audio processing unit 521 may be implemented to be included in the processor 520, and the head related transfer function 610, the artificial reverberator 620, or the crosstalk canceller 630 may be implemented as respective components within the processor 520 instead of the audio processing unit 521.

Referring to FIG. 6, the audio processing unit 521 or the processor 520 may generate a stereoscopic audio signal by applying, when the audio signal corresponding to execution of an application is input, a gain (unit: dB) according to the state of the display 560 to at least one of the head related transfer function 610, the artificial reverberator 620, or the crosstalk canceller 630, or a combination thereof with respect to the audio signal. A first gain may correspond to a first display state, e.g., a closed display state or a folded display state, and a second gain may correspond to a second display state, e.g. an open or unfolded display state. The audio processing unit 521 or the processor 520 may output a generated stereoscopic audio signal through the audio module 570 (e.g., a speaker), an external speaker, or an earphone.

According to an embodiment, the processor 520 may store, in the memory 530, the gain to be applied to the head related transfer function 610, the artificial reverberator 620, or the crosstalk canceller 630. The processor 520 may store, in the memory 530, different gains for each state of the display. The processor 520 may generate a stereoscopic audio signal using the audio processing unit 521 set to a gain according to the state of the display 560. For example, the different gains may have values between 0 and 1.

According to an embodiment, the memory 530 may store the different gains according to the state of the display 560 in a table form.

According to an embodiment, in case that the display 560 corresponds to a foldable display (e.g., the display 260 in FIG. 2 or the display 300 or 360 in FIGS. 3A and 3B), and the display 560 is in a state in which the display 560 is folded based on the folding axis, the processor 520 may control the stereoscopic audio effect to be reduced in the unfolded state of the display 560 since a content is provided through the display (e.g., the sub-display 360 in FIG. 3B). For example, in case that the display 560 is in the unfolded state, the stereoscopic audio effect may be controlled to be increased compared to the case in which the display 560 is in the folded state. The stereoscopic audio effect and/or the gain may be controlled according to a size of a current visible display area.

In an embodiment, the processor 520 may set a first gain in case that the display 560 is in the folded state, and set a second gain greater than the first gain in case that the display 560 is in the unfolded state. For example, in case that the display 560 is in the folded state, the first gain may be set to be 0 to minimize the stereoscopic audio effect, and in case that the display 560 is in the unfolded state, the second gain greater than the first gain may be set to be 1, for example, to maximize the stereoscopic audio effect.

According to an embodiment, the display 560 may be in the partially folded state in addition to the folded state or the unfolded state. In case that the display 560 is in the partially folded state, for example, the display 560 is folded at an angle between about 90 degrees and 180 degrees, different gains may be set depending on the folded angle. For example, in case that the folded angle is between 90 degrees and 180 degrees, the gain may be set to about 0.5, a value between 0 and 1. In case of dividing the angle between 90 degrees and 180 degrees into four equal parts in this way, a value between 0 and 1 may be set as a gain corresponding to a range to which the folded angle belongs among the four divided gains, and a method of determining a gain (or a value of a gain) corresponding to the state of the display, for example, the folded angle of the display is not limited thereto.

Although, in the above description, the case of adjusting a gain to be applied to the head related transfer function, the artificial reverberator, or the crosstalk canceller according to whether the display 560 is in the folded state, the unfolded state, or the partially folded state is used as an example, but the gain value may be set differently depending on whether a main display (e.g., the main display 300 in FIG. 3A) and a sub-display (e.g., the sub-display 360 in FIG. 3B) are turned on or off, for example, rather than the degree of folding. For example, in case that the main display (e.g., the main display 300 in FIG. 3A) is turned off and the sub-display (e.g., the sub-display 360 in FIG. 3B) is turned on, the gain to be applied to the head related transfer function, the artificial reverberator, or the crosstalk canceller may be set to minimum. For example, the gain may be set to minimum to minimize the stereoscopic audio effect. For example, in case that the main display (e.g., the main display 300 in FIG. 3A) is turned on and the sub-display (e.g., the sub-display 360 in FIG. 3B) is turned off, the gain to be applied to the head related transfer function, the artificial reverberator, or the crosstalk canceller may be set to be increased beyond the gain set to the minimum.

According to an embodiment, in case that the display 560 corresponds to a slidable or rollable display (e.g., the display 460 in FIG. 4) and the display 560 is in the slide-out state (or fully opened state), the stereoscopic audio effect may be controlled to be increased compared to the slide-in state (or fully closed state).

Accordingly, in the case that the display 560 is in a state (e.g., the slide-in state) in which a portion of the display 560 visible from the front side of the housing has a first size, the processor 520 provides a content through the display (e.g., the first area A1 of the display in FIG. 4(a)) and thus the processor 520 may control the first gain to be 0 so as to reduce the stereoscopic audio effect compared to the case that the display 560 is in a state (e.g., the slide-out state) in which the portion of the display 560 visible from the front side of the housing has a second size greater than the first size. On the other hands, in order to increase the stereoscopic audio effect, the processor 520 may set the second gain greater than the first gain to be 1, or any other suitable value.

According to an embodiment, the display 560 may be in the intermediate state between the slide-in state and the slide-out state. In case that the display 560 is in the intermediate state, different gains may be set depending on a distance moved out from the housing.

According to an embodiment, the memory 530 may store an algorithm for generating the stereoscopic audio effect, such as the head related transfer function, the artificial reverberator, or the crosstalk canceller. The processor 520 may apply the gain corresponding to the state of the display 560 to the algorithm for generating the stereoscopic audio effect. According to an embodiment, the processor 520 may apply an identical gain to the head related transfer function 610, the artificial reverberator 620, or the crosstalk canceller 630. In addition, the processor 520 may apply a different gain to each of the head related transfer function 610, the artificial reverberator 620, or the crosstalk canceller 630. For example, in case that the display 560 is in the fully unfolded state or slide-out state, the processor 520 may apply a gain set to be 1 to the head related transfer function 610, a gain set to be 0.9 to the artificial reverberator 620, and a gain set to be 1 to the crosstalk canceller 630.

According to an embodiment, the processor 520 may identify whether the electronic device 101 is in a speaker mode (e.g., a stereo speaker mode), and may apply a gain set to be 1 to the crosstalk canceller 630 in case that the electronic device is in the speaker mode and the display 560 is in the fully unfolded state or the slide-out state. On the other hand, in case that the electronic device is not in the speaker mode, and the display 560 is in the fully unfolded state or the slide-in state, a gain set to be 1 may be applied to each of the head related transfer function 610 and the artificial reverberator 620.

As described above, the audio processing unit 521 or the processor 520 may retrieve a gain value (or multiple gain values), which has (or have) been stored in the memory 530, according to the state of the display 560 and generate a stereoscopic audio signal by applying the gain value to an audio signal by using at least one of the head related transfer function 610, the artificial reverberator 620, or the crosstalk canceller 630 or any combination thereof. In an embodiment, the stereoscopic audio effect may be increased or reduced depending on the state of the display 560, thereby providing a realistic content and sound to the user.

According to an embodiment, an electronic device 101 may include a display 160 or 560, at least one sensor 176 or 576, an audio device (or an audio module) 570, at least one processor 120 or 520, and memory 460 storing instructions.

According to an embodiment, the at least one processor may be configured to, in response to execution of an application, identify a state of the display by using the sensor.

According to an embodiment, the instructions that, when executed by the at least one processor, cause the electronic device to, based on the identifying that the display is in the first state, generate a first stereoscopic audio signal from an audio signal, using an audio processing unit 521 set to a first gain, and output the generated first stereoscopic audio signal through the audio device.

According to an embodiment, the instructions are configured to cause the electronic device to, based on identifying that the state of the display has changed from the first state to a second state, change a gain of the audio processing unit from the first gain to a second gain.

According to an embodiment, the instructions are configured to cause the electronic device to generate a second stereoscopic audio signal from the audio signal, using the audio processing unit set to the second gain and output the generated second stereoscopic audio signal through the audio device.

According to an embodiment, the audio processing unit may be configured to operate based on at least one of a head related transfer function, an artificial reverberator, or a crosstalk canceller.

According to an embodiment, the instructions are configured to cause the electronic device to store different gains for each state of the display and change a gain of the audio processing unit to a gain corresponding to a changed state of the display among stored gains.

According to an embodiment, the different gains may be values between 0 and 1, the first gain may be 0, and the second gain may be 1.

According to an embodiment, the display may correspond to a foldable display, a first state of the display may correspond to a state in which the display is folded based on a folding axis, and a second state of the display may correspond to a state in which the display is unfolded.

According to an embodiment, the instructions are configured to cause the electronic device to, based on identifying that the state of the display has changed from the first state to the second state, apply the second gain which may be greater than the first gain to at least one of the head related transfer function, the artificial reverberator, or the crosstalk canceller.

According to an embodiment, the display may correspond to a slidable or rollable display, the first state of the display may be a state in which a size of a portion of the display visible from a front side of a housing is a first size, and the second state of the display is a state in which a size of the display visible from the front side of the housing is a second size greater than the first size. The second size may be a maximum size of the display, and the first size may be a minimum size of the display.

According to an embodiment, the instructions are configured to cause the electronic device to identify whether the electronic device is in a speaker mode, and apply, in response to identifying that the electronic device is in the speaker mode, the second gain greater than the first gain to the crosstalk canceller based on identifying that the state of the display has changed from the first state to the second state.

According to an embodiment, the instructions are configured to cause the electronic device to, in response to identifying that the electronic device is not in the speaker mode, apply the second gain greater than the first gain to the head related transfer function or the artificial reverberator based on identifying that the state of the display has changed from the first state to the second state.

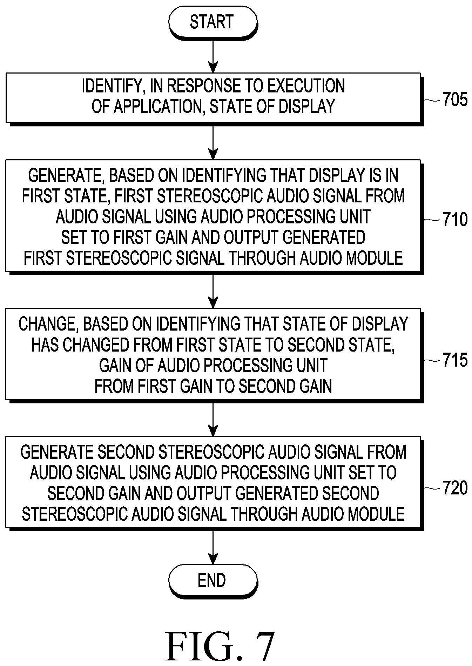

FIG. 7 is a flowchart for controlling an audio output according to a display state in an electronic device according to an embodiment.

Referring to FIG. 7, an operating method may include operation 705 to operation 720. Each operation of the operating method in FIG. 7 may be performed by an electronic device (e.g., the electronic device 101 in FIGS. 1 to 5) and/or at least one processor (e.g., the processor 120 in FIG. 1 or the processor 520 in FIG. 5) of the electronic device. In an embodiment, at least one of operation 705 to operation 720 may be omitted, the order of some operations may be changed, or another operation may be added.

In operation 705, the electronic device 101 may identify, in response to execution of an application, a state of the display 160 or 560 of the electronic device 101. The electronic device 101 may also identify the state of the display 160 or 560 using a sensor or any other suitable method or device.

In operation 710, the electronic device 101 may generate, based on the identifying that the display is in the first state, a first stereoscopic audio signal from an audio signal, using an audio processing unit 521 set to a first gain, and output the generated first stereoscopic audio signal through the audio module (or audio device) 570.

According to an embodiment, the audio processing unit may operate based on at least one of a head related transfer function, an artificial reverberator, or a crosstalk canceller.

In operation 715, the electronic device 101 may change, based on identifying that the state of the display has changed from the first state to a second state, a gain of the audio processing unit from the first gain to a second gain.

In operation 720, the electronic device 101 may generate a second stereoscopic audio signal from the audio signal, using the audio processing unit set to the second gain and output the generated second stereoscopic audio signal through the audio module (or audio device).

According to an embodiment, the electronic device 101 may apply, based on identifying that the state of the display has changed from the first state to the second state, the second gain greater (or smaller) than the first gain to at least one of the head related transfer function, the artificial reverberator, or the crosstalk canceller.

According to an embodiment, the electronic device 101 may store different gains for each state of the display and change a gain of the audio processing unit to a gain corresponding to a changed state of the display among stored gains.

According to an embodiment, the different gains may be values between 0 and 1, the first gain may be 0, and the second gain may be 1. A gain value of 1 may denote a maximum gain, and a gain value of 0 may denote a minimum gain or no gain.

According to an embodiment, the display may correspond to a foldable display, a first state of the display may correspond to a state in which the display is folded based on a folding axis, and a second state of the display may correspond to a state in which the display is unfolded.

According to an embodiment, the display may correspond to a slidable or rollable display, the first state of the display may be a state in which a size of a portion of the display visible from a front side of a housing is changed to be minimized, and the second state of the display may be a state in which a size of the display visible from the front side of the housing is changed to be maximized.

According to an embodiment, the electronic device 101 may identify whether the electronic device 101 is in the speaker mode. The electronic device 101 may apply, in response to identifying that electronic device 101 is in the speaker mode, a second gain greater than a first gain to the crosstalk canceller based on identifying that the state of the display has changed from the first state to the second state.

According to an embodiment, the electronic device 101 may apply, in response to identifying that electronic device 101 is not in the speaker mode, a second gain greater than a first gain to the head related transfer function or the artificial reverberator based on identifying that the state of the display has changed from the first state to the second state.

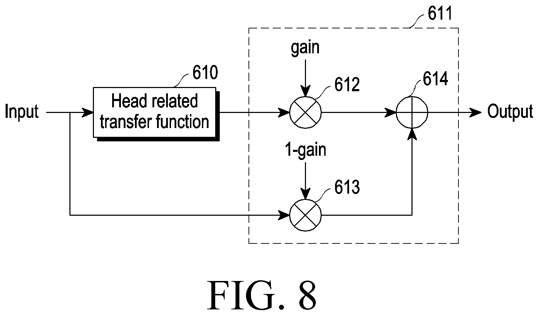

FIG. 8 is an exemplary diagram illustrating a head-related transfer function according to an embodiment.

The head related transfer function (HRTF) 610 may include information on a path from a spatial location of a sound generated from a sound source to both ears of the user, for example, a frequency transfer characteristic. The head related transfer function 610 may include information about reflection and diffraction from the head, torso, or ears present in a path from the sound source to an eardrum, which serves as a clue for the user to determine the location of the sound source, together with time difference and level difference information between channels by which a sense of direction is perceived. Therefore, a stereoscopic audio signal may be generated by applying the head related transfer function in which spatial information corresponding to a three-dimensional location is added to a simple sound that is not stereoscopic.

Referring to FIG. 8, in case that an audio signal is input, the input audio signal may be transferred to the head related transfer function 610 to which a designated gain 612 is applied. Here, the gain 612 may be determined according to the state of the display. For example, in case that the display is in the first state (e.g., the folded state or the slide-in state), the gain 612 may be determined to be 0 or a value close to 0. On the other hand, in case that the display is in the second state (e.g., the unfolded state or the slide-out state), the gain 612 may be determined to be 1 or a value close to 1. Here, the closer the gain 612 is set to 1, the higher the stereoscopic audio effect may appear. Therefore, assuming that the audio signal input to the head related transfer function 610 is signal S, referring to 611, a first stereoscopic audio signal (e.g., signal S') may be generated and output through the head related transfer function 610 by adding 614 a signal (e.g., signal S' + the gain (e.g., 1 dB)) generated by applying the gain 612 set to 1 to signal S' indicating directionality and a signal (e.g., signal S + 1 - the gain (e.g., 0 dB)) generated by applying 1 - the gain 613 to an original signal (e.g., signal S).In other words, a signal S is input into the head related transfer function 610 and, after being modified by the head related transfer function 610, and is then further modified with a first gain 612. The same signal S is modified with a second gain 613 (e.g., 1 - the first gain). The two differently modified signals are added together so that a sum is formed from the signal modified by the head related transfer function 610 and the first gain 612 and the signal modified by the second gain.

On the other hand, in case of the gain 612 set to 0 or a value close to 0, a second stereoscopic audio signal (e.g., signal S) may be generated and output through the head related transfer function 610 by adding 614 a signal (e.g., signal S' + the gain (e.g., 0 dB)) generated by applying the gain 612 set to 0 or a value close to 0 to signal S' indicating directionality and a signal (e.g., signal S + 1 - the gain (e.g., 1 dB)) generated by applying 1 - the gain 613 to an original signal (e.g., signal S).In other words, a signal S is input into the head related transfer function 610 and, after being modified by the head related transfer function 610, and is then further modified with a first gain 612. The same signal S is modified with a second gain 613 (e.g., 1 - the first gain). The two differently modified signals are added together so that a sum is formed from the signal modified by the head related transfer function 610 and the first gain 612 and the signal modified by the second gain. Hence, for example, if the first gain is 1, the second gain may be 0. If the first gain is 0, the second gain may be 1. The sum of the first gain and the second gain may be 1. In this way, a portion of the sound modified by the head related transfer function may be adjusted.

The first stereoscopic audio signal may correspond to a signal having a maximized stereoscopic audio effect compared to the second stereoscopic audio signal.

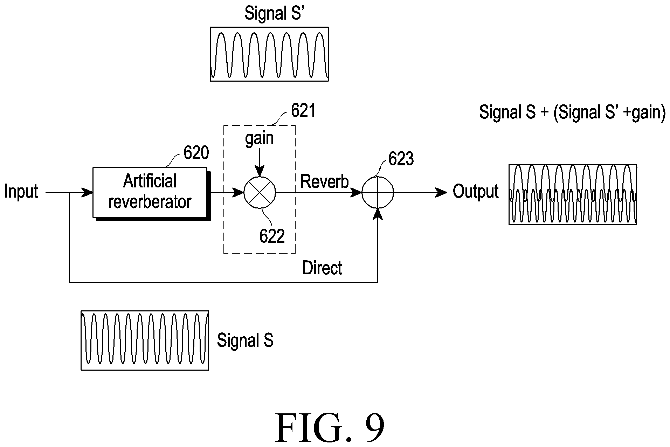

FIG. 9 is an exemplary diagram illustrating an artificial reverberator according to an embodiment.

The artificial reverberator may correspond to a function to provide virtual directionality by applying a function that simulates reflected sound (or reverberation) to an input audio signal.

Referring to FIG. 9, assuming that an audio signal input to the artificial reverberator 620 is signal S, when the display is in the second state (e.g., the unfolded state or the slide-out state), the gain 622 may be set to 1 or close to 1. Referring to 621, a first stereoscopic audio signal (e.g., signal S + (signal S' + the gain)) may be generated and output through the artificial reverberator 620 by adding 623 a signal (e.g., signal S' + the gain (e.g., 1 dB)) generated by applying the gain 622 set to 1 to signal S' indicating a reflected sound with respect to an audio signal and an original audio signal (e.g., signal S).In other words, an original signal and a signal modified by the artificial reverberator may be mixed, wherein the proportion of the signal modified by the artificial reverberator in the final signal may depend on the current display state.

On the other hand, in case that the display is in the first state (e.g., the folded state or the slide-in state), the gain 622 may be determined to be 0 or a value close to 0. Accordingly, a second stereoscopic audio signal (e.g., signal S + (signal S' + the gain)) may be generated and output through the artificial reverberator 620 by adding 623 a signal (e.g., signal S' + the gain (e.g., 0 dB)) generated by applying the gain 622 set to 0 to signal S' indicating a reflected sound with respect to an audio signal and an original audio signal (e.g., signal S). The second stereoscopic audio signal may correspond to a signal having a reduced stereoscopic audio effect compared to the first stereoscopic audio signal.

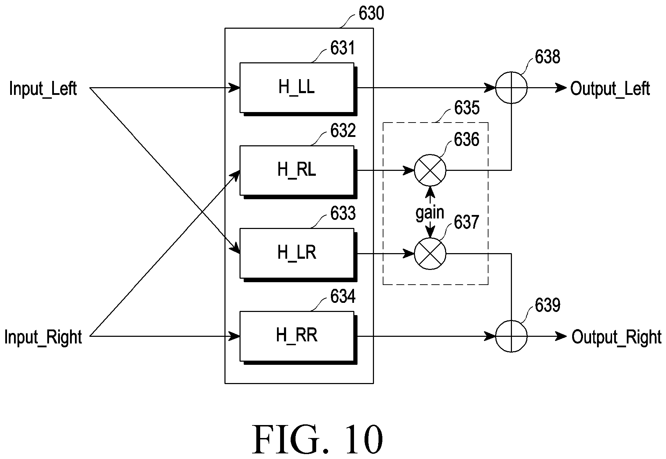

FIG. 10 is an exemplary diagram illustrating a crosstalk canceller according to an embodiment.

In case of listening to a stereoscopic audio signal through a stereo speaker, audio signals generated from the left and right speakers are mixed by interference in space when the signals travel to the user's ears, making it difficult to feel the stereoscopic audio effect at the listening point. The mixed signal added to the original audio signal, for example, a two-channel audio signal, at the listening point is referred to as crosstalk, and may be canceled by using the crosstalk canceller 630.

Referring to FIG. 10, the crosstalk canceller 630 may cancel crosstalk from a two-channel audio signal (e.g., left and right audio signals) by using four channels (e.g., H_LL 631, H_RL 632, H_LR 633, and/or H_RR 634). The four channels may include a left left channel 631, a right left channel 632, a left right channel 633, and a right right channel 634.

Referring to reference numeral 635, in case that a gain 636 or 637 is set to 1 or close to 1, a signal of H_LL 631 and a signal of H_RL 632 are added 638 so that a left stereoscopic audio signal may be output, and a signal of H_LR 633 and a signal of H_RR 634 are added 639 so that a right stereoscopic audio signal may be output. For example, in case that the gain 636 or 637 is set to 1 or close to 1, crosstalk may be generated to reduce the stereoscopic audio effect. On the contrary, in case that the gain 636 or 637 is set to 0 or close to 0, crosstalk of H_RL 632 channel and H_LR 633 channel among H_LL 631 channel, H_RL 632 channel, H_LR 633 channel, or H_RR 634 channel is canceled so that the stereoscopic audio effect may be increased. Therefore, in the speaker mode in which a sound is output through the stereo speaker included in the electronic device 101, crosstalk is canceled in a form corresponding to the speaker so that the user may experience the stereoscopic sound effect.

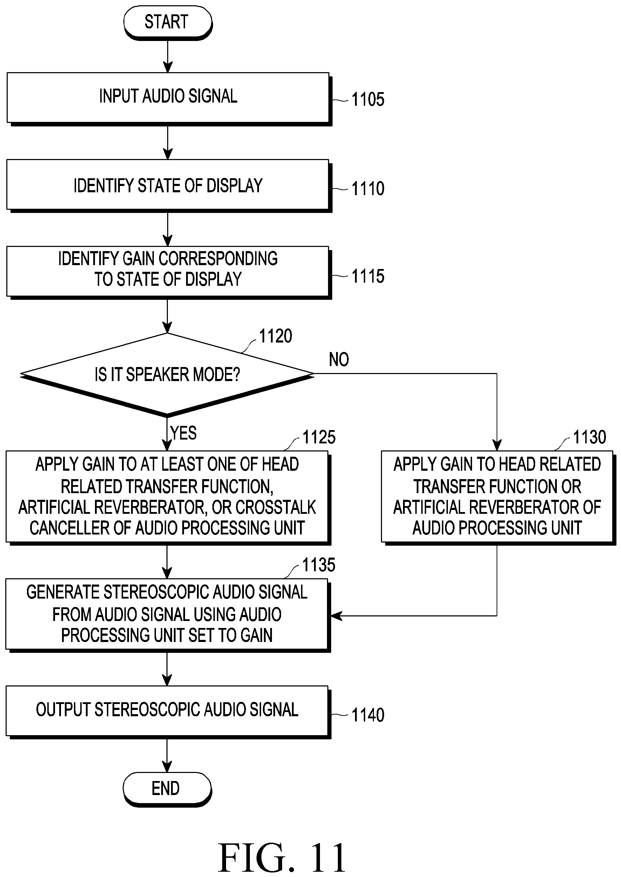

FIG. 11 is an operation flowchart of an audio processing unit according to a display state according to an embodiment.

Referring to FIG. 11, an operating method may include operation 1105 to operation 1140. Each operation of the operating method in FIG. 11 may be performed by an electronic device (e.g., the electronic device 101 in FIGS. 1 to 5) and/or at least one processor (e.g., the processor 120 in FIG. 1 or the processor 520 in FIG. 5) of the electronic device. In an embodiment, at least one of operation 1105 to operation 1140 may be omitted, the order of some operations may be changed, or another operation may be added.

In operation 1105, the electronic device 101 may identify, in response to execution of an application or, e.g., using a sensor,, a state of the display 560 in operation 1110 when an audio signal is input.

In operation 1115, the electronic device 101 may identify a gain corresponding to the state of the display 560.

In operation 1120, the electronic device 101 may identify whether it is the speaker mode (or whether the speaker mode is active). For example, the electronic device 101 may identify whether it is the speaker mode (or whether the speaker mode is active) using a speaker (e.g., a stereo speaker) in the electronic device 101.

In response to identifying that it is the speaker mode (or that the speaker mode is active), in operation 1125, the electronic device 101 may apply the gain to at least one of a head related transfer function, an artificial reverberator, or a crosstalk canceller of the audio processing unit 521.

In operation 1135, the electronic device 101 may generate a stereoscopic audio signal from the audio signal using the audio processing unit 521 set to the gain and in operation 1140, output the generated stereoscopic audio signal. For example, the electronic device 101 may control the stereoscopic audio signal to be output through a speaker (e.g., a stereo speaker) included in the electronic device 101.

Meanwhile, in response to identifying that it is not the speaker mode (or that the speaker mode is not active) in operation 1120, the electronic device 101 may apply the gain to the head related transfer function and the artificial reverberator of the audio processing unit 521 in operation 1130. In operation 1135, the electronic device 101 may generate a stereoscopic audio signal from the audio signal using the audio processing unit 521 set to the gain and in operation 1140, output the generated stereoscopic audio signal. For example, the electronic device 101 may control the stereoscopic audio signal to be output through the audio module 570 (e.g., the audio module in FIGS. 2 to 4).

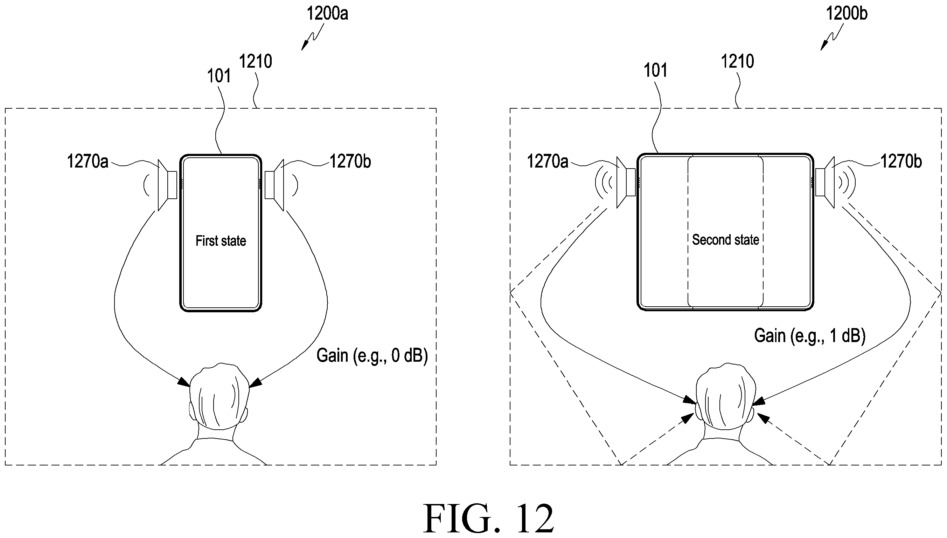

FIG. 12 is an exemplary diagram illustrating a characteristic of a stereoscopic audio signal output according to a display state with respect to a user according to an embodiment. FIG. 12 exemplifies the electronic device 101 having a slidable or rollable display structure.

The user may execute at least one application that requires an output of an audio signal, such as a voice call function, audio file playback function, or video recording or playback function by using the electronic device 101 within a space 1210. The electronic device 101 may identify, in response to the execution of the application, a state of the display before generating the stereoscopic audio signal from the audio signal.

As shown in 1200a in FIG. 12, in case that the display is in a first state (e.g., the slide-in state), the electronic device 101 may apply, when the audio signal is input, a first gain (e.g., 0 dB) to at least one of the head related transfer function, the artificial reverberator, or the crosstalk canceller so as to generate a stereoscopic audio signal from the input audio signal and output the stereoscopic audio signal through a speaker (e.g., 1270a or 1270b).

As shown in 1200b in FIG. 12, in case that the state of the display has changed from the first state (e.g., the slide-in state) to a second state (e.g., the slide-out state), the electronic device 101 may apply, when the audio signal is input, a second gain (e.g., 1 dB) greater than the first gain (e.g., 0 dB) to at least one of the head related transfer function, the artificial reverberator, or the crosstalk canceller so as to generate a stereoscopic audio signal from the input audio signal and output the stereoscopic audio signal through the speaker (e.g., 1270a or 1270b). In case that the electronic device 101 operates in the speaker mode in which a sound is output through a stereo speaker, the electronic device 101 may apply the second gain (e.g., 1 dB) greater than the first gain (e.g., 0 dB) to the crosstalk canceller so as to generate a stereoscopic audio signal from the input audio signal and output the stereoscopic audio signal through the speaker (e.g., 1270a or 1270b). In case of operating in the speaker mode, the electronic device 101 may cancel the crosstalk to generate the stereoscopic audio signal. For example, by being reflected on the wall of the space 1210 surrounding the user and output to the point where the user is located, the user may hear a stereoscopic sound similar to that projected from a speaker located at the listening point.

In addition, in case that the state of the display has changed from the second state (e.g., the slide-out state) to the first state (e.g., the slide-in state), the gain to be applied to at least one of the head related transfer function, the artificial reverberator, or the crosstalk canceller may be reduced to reduce the stereoscopic audio effect.

According to an embodiment, by adjusting a gain of an algorithm for generating the stereoscopic audio effect according to the change of the state of the display, the stereoscopic audio effect may be maximized in case that the display is in the unfolded state or the slide-out state so that visual and auditory experiences may be linked to provide a natural user experience.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," ***"coupled to," "connected with,"*** or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

An embodiment may provide a computer-readable storage medium configured to store at least one instruction, wherein the at least one instruction may cause, when executed by at least one processor 120 or 520 of an electronic device 101, the electronic device to perform at least one operation, and the at least one operation may include an operation of identifying, in response to execution of an application, a state of a display 160 or 560 of the electronic device.

According to an embodiment, the at least one operation may include an operation of generating, based on identifying that the display is in the first state, a first stereoscopic audio signal from an audio signal using an audio processing unit 521 set to a first gain, and output the generated first stereoscopic audio signal through an audio device (or an audio module) 570.

According to an embodiment, the at least one operation may include an operation of changing, based on identifying that the state of the display has changed from the first state to a second state, a gain of the audio processing unit from the first gain to a second gain.

According to an embodiment, the at least one operation may include an operation of generating a second stereoscopic audio signal from the audio signal using the audio processing unit set to the second gain and outputting the generated second stereoscopic audio signal through the audio audio device.

According to one embodiment, the display may be a slidable or rollable display, the first state of the display is a state in which a size of a portion visible from a front side of a housing is changed to a minimum, and the second state of the display is a state in which the size of the portion visible from the front side of the housing is changed to a maximum.

## Claims

1. An electronic device (101) comprising,
a display (160, 560);
at least one sensor (176, 576);
an audio device (570);
at least one processor (120, 520); and
memory (530) storing instructions that, when executed by the at least one processor, cause the electronic device (101) to:
in response to execution of an application, identify a state of the display (160, 560) by using the sensor (176, 576);
based on the identifying that the display (160, 560) is in a first state, generate a first stereoscopic audio signal from an audio signal, using an audio processing unit (521) set to a first gain, and output the generated first stereoscopic audio signal through the audio device (570);
based on identifying that the state of the display (160, 560) has changed from the first state to a second state, change a gain of the audio processing unit (521) from the first gain to a second gain; and
generate a second stereoscopic audio signal from the audio signal, using the audio processing unit (521) set to the second gain, and output the generated second stereoscopic audio signal through the audio device (570).

2. The electronic device of claim 1, wherein the audio processing unit (521) is configured to operate based on at least one of an HRTF (head related transfer function), an artificial reverberator, or a crosstalk canceller.

3. The electronic device of claim 1 or 2, wherein the instructions cause the electronic device (101) to:
store different gains for each state of the display (160, 560); and
change the gain of the audio processing unit (521) to a gain corresponding to a changed state of the display (160, 560) among the stored gains.

4. The electronic device of any one of claims 1 to 3, wherein the different gains are values between 0 and 1, the first gain is 0, and the second gain is 1.

5. The electronic device of any one of claims 1 to 4, wherein the display is a foldable display,
the first state of the display (160, 560) is a state in which the display (160, 560) is folded with respect to a folding axis, and
the second state of the display (160, 560) is a state in which the display (160, 560) is in an unfolded state.

6. The electronic device of any one of claims 1 to 5, wherein the instructions cause the electronic device (101) to:
based on identifying that the state of the display (160, 560) has changed from the first state to the second state, apply the second gain greater than the first gain to at least one of the head related transfer function, the artificial reverberator, or the crosstalk canceller.

7. The electronic device of any one of claims 1 to 6, wherein the display (160, 560) is a slidable or rollable display,
the first state of the display (160, 560) is a state in which a size of a portion of the display (160, 560) visible from a front side of a housing is a first size, and
the second state of the display (160, 560) is a state in which the size of the portion of the display visible from the front side of the housing is changed to a second size greater than the first size.

8. The electronic device of any one of claims 1 to 7, wherein the instructions cause the electronic device (101) to:
identify whether the electronic device (101) is in a speaker mode; and
in response to identifying that electronic device (101) is in the speaker mode, apply the second gain greater than the first gain to the crosstalk canceller based on identifying that the state of the display (160, 560) has changed from the first state to the second state.

9. The electronic device of any one of claims 1 to 8, wherein the instructions cause the electronic device (101) to:
in response to identifying that electronic device (101) is not in the speaker mode, apply the second gain greater than the first gain to the head related transfer function or the artificial reverberator based on identifying that the state of the display (160, 560) has changed from the first state to the second state.

10. A method for controlling an audio output according to a state of a display (160, 560) in an electronic device (101), the method comprising:
in response to execution of an application, identifying a state of a display (160, 560) of the electronic device (101) by using at least one sensor (176, 576) of the electronic device (101);
based on identifying that the display (160, 560) is in a first state, generating a first stereoscopic audio signal from an audio signal, using an audio processing unit (521) set to a first gain, and outputting the generated first stereoscopic audio signal through an audio device (570);
based on identifying that the state of the display (160, 560) has changed from the first state to a second state, changing a gain of the audio processing unit (521) from the first gain to a second gain; and
generating a second stereoscopic audio signal from the audio signal, using the audio processing unit (521) set to the second gain, and outputting the generated second stereoscopic audio signal through the audio device (570).

11. The method of claim 10, wherein the audio processing unit (521) is configured to operate based on at least one of a head related transfer function, an artificial reverberator, or a crosstalk canceller.

12. The method of claim 10 or 11, comprising:
storing different gains for each state of the display (160, 560); and
changing the gain of the audio processing unit (521) to a gain corresponding to a changed state of the display (160, 560) among stored gains.

13. The method of any one of claims 10 to 12, wherein the display (160, 560) is a foldable display,
the first state of the display (160, 560) is a state in which the display (160, 560) is folded with respect to a folding axis, and
the second state of the display (160, 560) is a state in which the display (160, 560) is in an unfolded state.

14. The method of one of claim 10 to claim 13, comprising, based on identifying that the state of the display (160, 560) has changed from the first state to the second state, applying the second gain greater than the first gain to at least one of the head related transfer function, the artificial reverberator, or the crosstalk canceller.

15. A computer-readable storage medium for storing at least one instruction,
wherein the at least one instruction is configured to, when executed by at least one processor (120, 520) of an electronic device (101), cause the electronic device (101) to perform at least one operation, and
the at least one operation comprises:
in response to execution of an application, identifying a state of a display (160, 560) of the electronic device (101) by using at least one sensor (176, 576) of the electronic device (101);
based on identifying that the display (160, 560) is in a first state, generating a first stereoscopic audio signal from an audio signal, using an audio processing unit (521) set to a first gain, and outputting the generated first stereoscopic audio signal through an audio device (570);
based on identifying that the state of the display (160, 560) has changed from the first state to a second state, changing a gain of the audio processing unit from the first gain to a second gain; and
generating a second stereoscopic audio signal from the audio signal, using the audio processing unit (521) set to the second gain, and outputting the generated second stereoscopic audio signal through the audio device (570).
